# EUROPÄISCHE PATENTANMELDUNG

(11) **EP 0 891 035 A2**
(43) Veröffentlichungstag der Anmeldung: **13.01.1999**
(21) Anmeldenummer: 98202261.8
(22) Anmeldetag: 06.07.1998
(51) Int. Cl.: H02M 1/12

(54) **Schaltungsanordnung zu Speisen einer Last**

(30) Priorität: 11.07.1997 DE 19729705
(71) Anmelder: Philips Patentverwaltung GmbH, 22335 Hamburg (DE); Koninklijke Philips Electronics N.V., 5621 BA Eindhoven (NL)
(72) Erfinder: Lürkens, Peter, Dr., Röntgenstrasse 24, 22335 Hamburg (DE)
(74) Vertreter: Peters, Carl Heinrich, Dipl.-Ing.

(57) **Zusammenfassung**

Beschrieben wird eine Schaltungsanordnung zum Speisen einer ein- oder mehrphasigen Last aus einem Energieversorgungsnetz, welches eine wenigstens nahezu sinusförmige Netzwechselspannung führt, für deren Frequenz die Last ein wenigstens nahezu ohmsches Verhalten aufweist, mit
- einer Zweiweg-Gleichrichterstufe zum Gewinnen einer wenigstens nahezu sinusbetragförmigen Zwischenkreisspannung,
- einer nach Art eines ein- oder mehrphasigen Wechselrichters ausgebildeten Modulationsstufe, mit der nach Maßgabe eines Steuersignals, dessen Frequenz groß gegenüber der Frequenz der Netzwechselspannung ist, aus der Zwischenkreisspannung wenigstens eine hochfrequente Speisespannung zum Zuführen zur Last erzeugt wird, wobei die Speisespannung(en) aus dem Produkt des Steuersignals mit der Zwischerkreisspannung bestimmt wird (werden), und
- einer mit der Zweiweg-Gleichrichterstufe gekoppelten Hochfrequenz-Filterstufe zum Unterdrücken von in das Energieversorgungsnetz eingestreuten Störungen in einem die Frequenz des Steuersignals einschließenden Frequenzbereichs.

Durch diese Schaltungsanordnung wird mit einfachen Mitteln ein oberschwingungsarmer Netzstrom gewährleistet.

## Beschreibung

Die Erfindung bezieht sich auf eine Schaltungsanordnung zum Speisen einer ein- oder mehrphasigen Last aus einem Energieversorgungsnetz, welches eine wenigstens nahezu sinusförmige Netzwechselspannung führt.

Bei der Speisung elektronischer Energiewandler aus einem Energieversorgungsnetz, welches als einphasiges Wechselstromnetz ausgebildet ist, wird auf der Netzseite häufig eine Zweiweg-Brückengleichrichterschaltung mit nachgeschaltetem Speicherkondensator verwendet. Diese Brückengleictuichterschaltung, auch als Graetz-Brücke bezeichnet, bewirkt, daß nur dann ein Netzstrom zur Nachladung des Speicherkondersators aus dem Energieversorgungsnetz fließt, wenn der Betrag des Augenblickswerts der Spannung im Energieversorgungsnetz größer ist als die Spannung am Speicherkondensator. Dem Energieversorgungsnetz wird dadurch ein stark impulsförmiger Strom entnommen, wobei dessen Mittelwert dem Mittelwert des Stromes entspricht, der von einer Last dem Speicherkondensator entnommen wird. Der so entstehende Netzstrom, der dem Energieversorgungsnetz entnommen wird, weist einen hohen Anteil an Oberschwingungen auf. Wird mit einer derartigen Graetz-Brücke eine Last höherer Leistung betrieben, führt dies sehr schnell dazu, daß der Anteil an Oberschwingungen eine Grenze übersteigt, die von den Betreibern des Energieversorgungsnetzes als höchstzulässiger Oberwellenanteil geduldet wird. Lasten, die einen Netzstrom mit höherem Gehalt an Oberschwingungen erzeugen, sind nach geltenden Richtlinien der Betreiber von Energieversorgungsnetzen und auch nach gültigen nationalen und europäischen Normen nicht mehr zulässig.

Es ist bekannt, einer Graetz-Brücke eine Siebdrossel nachzuschalten, die zu einer Glättung des Netzstromes und damit zu einer Verringerung des Gehaltes an Oberschwingungen führt. Für höhere Leistungen wird eine solche Siebdrossel jedoch sehr voluminös und schwer, was eine kompakte und leichte Bauform von Geräten mit derartigen Netzteilen beeinträchtigt.

Aus der Druckschrift "Schaltnetzteile" von W. Hirschmann und A. Hauenstein, herausgegeben von der Firma Siemens, ISBN-Nummer 3-8009-1550-2, Abschnitt 6.4, Seiten 441 bis 444, ist ein Hochsetzer mit sinusförmiger Stromaufnahme bekannt. Diese Anordnung, auch als Preconditioner bezeichnet, umfaßt einen elektronischen Leistungsschalter, eine Hochfrequenzdrossel und eine sehr schnell schaltende Diode. Der Leistungsschalter muß dabei durch eine geeignete Steuerung angesteuert werden, die den Netzstrom sinusförmig regelt, ohne dabei die Spannung im Zwischenkreis, d.h. hinter der Graetz-Brücke, maßgeblich schwanken zu lassen. Bei geeigneter Auslegung der Steuerung soll mit dieser Schaltungsanordnung ein sinusförmiger Netzstrom möglich sein, die Oberschwingungen im Netzstrom sollen unabhängig von einer an diese Schaltungsanordnung angeschlossenen Last wenigstens weitgehend unterdrückt werden können, und die Leistung der Last soll entsprechend der wenigstens nahezu konstanten Spannung im Zwischenkreis ebenfalls konstant gehalten werden können. Der hierfür erforderliche Schaltungsaufwand ist jedoch verhältnismäßig hoch.

In vielen Fällen ist es nicht erforderlich, einer Last eine zeitlich konstante Leistung zuzuführen. Vielmehr genügt es, wenn der Augenblickswert dieser Leistung beispielsweise mit der doppelten Netzfrequenz um einen Mittelwert schwankt. Insbesondere in diesen Fällen wäre eine Verwendung der vorstehend genannten "Preconditioner" sehr unvorteilhaft.

Die Erfindung hat die Aufgabe, eine Schaltungsanordnung zum Speisen einer Last aus einem Energieversorgungsnetz zu schaffen, die mit einfachen Mitteln einen oberschwingungsarmen Netzstrom gewährleistet.

Erfindungsgemäß wird diese Aufgabe gelöst durch eine Schaltungsanordnung zum Speisen einer ein- oder mehrphasigen Last aus einem Energieversorgungsnetz, welches eine wenigstens nahezu sinusförmige Netzwechselspannung führt, für deren Frequenz die Last ein wenigstens nahezu ohmsches Verhalten aufweist, mit
- einer Zweiweg-Gleichrichterstufe zum Gewinnen einer wenigstens nahezu sinusbetragförmigen Zwischerkreisspannung,
- einer nach Art eines ein- oder mehrphasigen Wechselrichters ausgebildeten Modulationsstufe, mit der nach Maßgabe eines Steuersignals, dessen Frequenz groß gegenüber der Frequenz der Netzwechselspannung ist, aus der Zwischenkreisspannung wenigstens eine hochfrequente Speisespannung zum Zuführen zur Last erzeugt wird, wobei die Speisespannung(en) aus dem Produkt des Steuersignals mit der Zwischenkreisspannung bestimmt wird (werden), und
- einer mit der Zweiweg-Gleichrichterstufe gekoppelten Hochfrequenz-Filterstufe zum Unterdrücken von in das Energieversorgungsnetz eingestreuten Störungen in einem die Frequenz des Steuersignals einschließenden Frequerzbereichs.

Die Erfindung macht sich die Erkenntnis zunutze, daß ein sinusförmiger Netzstrom für einen ohmschen Widerstand als Last hinter einem Netsteil mit einer Graetz-Brücke sehr einfach ohne weiteres dadurch erhalten wird, daß der eingangs beschriebene Kondensator im Zwischenkreis, d.h. im Anschluß an die Graetz-Brücke weggelassen wird. Dadurch stellt sich die Spannung im Zwischenkreis stets als Betrag der Netzspannung des Energieversorgungsnetzes ein, und der Netzstrom ist proportional der Netzspannung. Die erfindungsgemäße Schaltungsanordnung erzeugt für Lasten, die in einem vorgegebenen Frequenzbereich um die Netzfrequenz ein im wesentlichen ohmsches Verhalten zeigen, ebenfalls einen sinusförmigen Netzstrom. Derartige Lasten können z.B. durch hochfrequentgeschaltete Gleichspannungswandler mit ohmscher Last gebildet sein, aber auch durch schnell laufende wechselrichtergespeiste Motoren, wie z.B. Asynchronmotoren und Permanentmagnetmotoren. Der Frequenzbereich, in dem die Lasten im wesentlichen ohmsches Verhalten zeigen, kann beispielsweise von 0 bis 2 kHz gewählt werden. Diese Wahl richtet sich nach den Vorschriften über die Begrenzung der Oberschwingungen. Die Frequenz, mit der z.B. die hochfrequentgeschalteten Gleichspannungswandler betrieben werden, wird in der Regel groß gegenüber der Obergrenze des genannten Frequenzbereichs sein.

Bei der erfindungsgemäßen Schaltungsanordnung ist die von der Last aufgenommene Leistung stets dem Qudrat der Zwischenkreisspannung proportional, die der Modulationsstufe als Eingangsspannung zugeleitet wird. Da die erfindungsgemäße Schaltungsanordnung keinen Energiespeicher enthält, der bei der Netzfrequenz einen nennenswerten Energiebetrag speichert, folgt, daß Netzspannung und Netzstrom proportional sind. Somit stellt sich bei sinusförmiger Netzspannung auch ein sinusförmiger Netzstrom ein. Die mit der Zweiweg-Gleichrichterstufe gekoppelte Hochfrequenz-Filterstufe dient lediglich zum Unterdrücken von Störungen bei der Frequenz des Steuersignals. Diese Hochfrequenz-Filterstufe kann bevorzugt eine sehr kleine Induktivität und eine sehr kleine Kapazität enthalten, die beispielsweise der Zweiweg-Gleichrichterstufe nachgeschaltet sind. Die Induktivität kann wahlweise auch in die Verbindung zwischen dem Energieversorgungsnetz und der Zweiweg-Gleichrichterstufe eingefügt werden. Sowohl die Induktivität als auch die Kapazität sind so dimensioniert, daß die von ihnen aufgenommenen Stromanteile klein gegenüber dem ohmschen Strom durch die Last sind.

Bei Schaltungsanordnungen der erfindungsgemäßen Art besteht häufig die Schwierigkeit, daß die Impedanz der Last bei niedrigen Frequenzen, d.h. auch bei der Netzfrequenz des Energieversorgungsnetzes, sehr gering ist. Dieser Fall tritt beispielsweise dann auf, wenn die Last Transformatoren, schnell laufende Motoren oder dergleichen enthält. Da diese Lasten regelmäßig auf die hochfrequente Speisespannung dimensioniert sind, ergibt sich bei niedrigen Frequenzen in den meisten Fällen zwangsläufig eine geringe Impedanz.

Bei der erfindungsgemäßen Schaltungsanordnung werden die hochfrequenten Speisespannungen für die Last aus dem Produkt des hochfrequenten Steuersignals mit der sinusbetragförmigen Zwischenkreisspannung bestimmt. Die hochfrequenten Speisespannungen weisen daher eine sinusbetragförmige Hüllkurve auf. Dies bedeutet, daß die Speisespannungen Seitenbänder aufweisen, die symmetrisch zur Frequenz des Steuersignals angeordnet sind. Diese Seitenbänder enthalten auch Anteile bei sehr niedrigen Frequenzen. Der Grund dafür ist, daß die sinusbetragförmige Zwischenkreisspannung selbst nicht spektral rein ist, sondern Anteile bei allen geradzahligen Vielfachen der Netzfrequenz aufweist. Die Mischprodukte dieser Spektralanteile mit dem Steuersignal liegen auch bei sehr niedrigen Frequenzen. Diese niederfrequenten Spektralanteile können in der Last mit niedriger Impedanz bei geringen Frequenzen beträchtliche niederfrequente Ströme erzeugen. Diese Ströme wirken durch die Modulationsstufe in die Zweiweg-Gleichrichterstufe zurück und können dort die Unterdrückung der Oberschwingungen zunichte machen.

Dieser Nachteil ließe sich vermeiden, wenn statt der sinusbetragförmigen Spannung im Zwischenkreis dem Modulator unmittelbar die sinusförmige Netzspannung zugeführt würde. Zum Verarbeiten der sinusförmigen Netzspannung ist es jedoch erforderlich, daß die Modulationsstufe Leistungsschalter enthält, die für jede Spannungs- und Stromrichtung geeignet sind. Eine derartige Schaltungsanordnung wird auch als Direktumrichter bezeichnet. Derartige Direktumrichter sind jedoch deutlich aufwendiger als eine Modulationsstufe für nur eine Strom- bzw. Spannungspolarität.

Zur Vermeidung der Störungen, die durch die sinusbetragförmige Spannung im Zwischenkreis entsteht, wird gemäß einer Fortbildung der Erfindung eine Steuersignal-Inversionsstufe vorgesehen, durch die das Vorzeichen des Steuersignals von je einer Halbperiode der Netzwechselspannung zur nächsten Halbperiode gewechselt wird. Durch diese Maßnahme läßt sich der gleiche Effekt wie mit einem Direktumrichter erzielen. Das Vorzeichen des Steuersignals wird bei jedem Nulldurchgang der Netzspannung umgekehrt. Da die Modulationsstufe nach Art eines Multiplizierers arbeitet, hat dies die gleiche Wirkung, als ob die Spannung im Zwischenkreis nicht mehr sinusbetragförmig, sondern rein sinusförmig verlaufen würde. Dadurch reduzieren sich die Seitenbänder im Spektrum der von der Modulationsstufe abgegebenen Speisespannungen auf nur noch zwei Spektrallinien, die im Abstand der Netzfrequenz beidseitig der Frequenz des Steuersignals angeordnet sind. In diesen Seitenbändern treten somit keine niederfrequenten Anteile mehr auf. So werden niederfrequente Ströme in der Last vermieden und infolgedessen auch Störungen, die durch Rückwandlung über die Modulationsstufe in die Zweiweg-Gleichrichterstufe und damit das Energieversorgungsnetz eingestreut werden könnten.

Bevorzugt umfaßt die Steuersignal-Inversionsstufe eine Vorzeichendetektionsstufe zum Detektieren des Augenblickswertes der Polarität der Netzwechselspannung und zum Abgeben eines diese Polarität anzeigenden Vorzeichensignals sowie eine Multiplikationsstufe zum Erzeugen eines vorzeichenkorrigierten Steuersignals durch multiplizieren des Steuersignals mit dem Vorzeichensignal.

Bei dieser Ausgestaltung der Erfindung dient die Vorzeichendetektionsstufe als Meßschaltung, mit der die Polarität der Netzwechselspannung festgestellt wird. Die Vorzeichendetektionsstufe erzeugt ein Signal, welches dem Wert +1 oder -1 entspricht. Dieses Signal wird der Multiplikationsstufe zugeführt und dient in dieser Multiplikationsstufe zur Umkehr der Polarität des Steuersignals bei jedem Nulldurchgang der Netzwechselspannung.

Liegt in einer Fortbildung der erfindungsgemäßen Schaltungsanordnung das Steuersignal bereits als binäres Schaltsignal vor, wie es beispielsweise vorteilhaft unmittelbar auch als Schaltsignal für Leistungstransistoren verwendet werden kann, wird die Steuersignal-Inversionsstufe bevorzugt mit einem mit dem Vorzeichensignal umschaltbaren Inverter ausgebildet, den das Steuersignal durchläuft. Dieser umschaltbare Inverter tritt dann an die Stelle der Multiplikationsstufe und kann im einfachsten Fall als Exklusiv-Oder-Gatter ausgebildet sein.

Ausführungsbeispiele der Erfindung werden in der Zeichnung dargestellt und sind im nachfolgenden näher beschrieben. Dabei sind übereinstimmende Elemente mit identischen Bezugszeichen versehen. Es zeigen:
Fig. 1 ein erstes Ausführungsbeispiel der Erfindung,
Fig. 2 ein zweites Ausführungsbeispiel der Erfindung,
Fig. 3 eine Abwandlung eines Teil des zweiten Ausführungsbeispiels,
Fig. 4 eine schematische Darstellung einiger Signalverläufe zur Erläuterung der Furktionsweise der Schaltungsanordnungen nach Fig. 1 und 2.

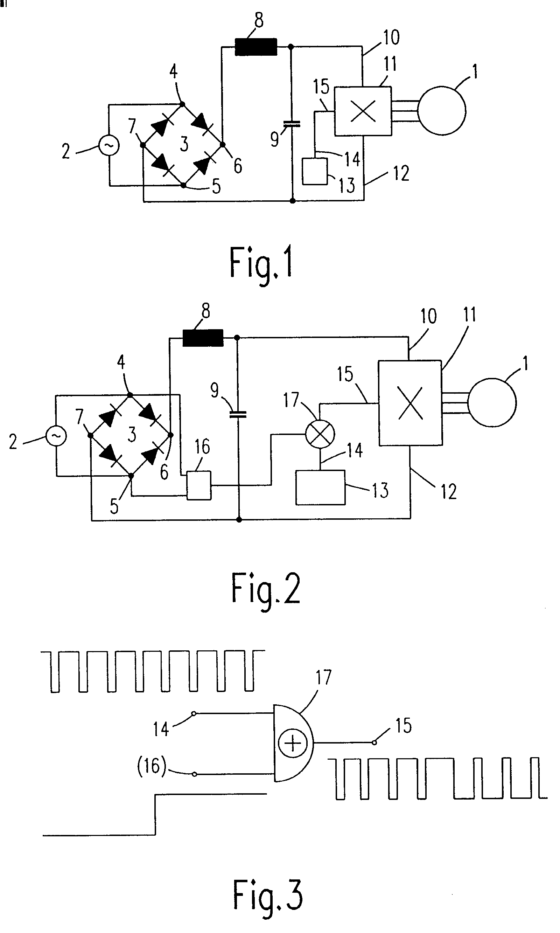

Fig. 1 zeigt eine Schaltungsanordnung zum Speisen einer im vorliegenden Asuführungsbeispiel dreiphasigen Last 1, beispielsweise eines dreiphasigen Motors, aus einem Energieversorgungsnetz 2, welches mit seinem vereinfachten Ersatzschaltbild als Wechselspannungsquelle dargestellt ist. An dieses Energieversorgungsnetz 2 ist eine Zweiweg-Gleichrichterstufe 3, beispielsweise eine Graetz-Brücke, mit je einem ihrer Wechselspannungsanschlüsse 4,5. Ein erster, rm Betrieb der Graetz-Brücke einen positiven Spannungspegel führender Gleichspannungsanschluß 6, im folgenden als Pluspol der Graetz-Brücke bezeichnet, ist über eine Induktivität 8 mit einem ersten Speisespannungsanschluß 10 einer Modulationsstufe 11 verbunden. Ein zweiter, im Betrieb einen negativen Spannungspegel führender Gleichspannungsanschluß der Graetz-Brücke 3, im folgenden als Minuspol 7 bezeichnet, ist mit einem zweiten Speisespannungsanschluß 12 der Modulationsstufe 11 verbunden. Die Speisespannungsanschlüsse 10, 12 der Modulationsstufe 11 sind ferner durch eine Kapazität 9 überbrückt. Eine Steuersignal-Erzeugungsstufe 13 ist mit ihrem Ausgang 14 an einen Steuersignaleingang 15 der Modulationsstufe 11 angeschlossen. Im Betrieb der Schaltungsanordnung nach Fig. 1 wird der Graetz-Brücke 3 eine wenigstens nahezu sinusförmige Netzwechselspannung über die Wechselspannungsanschlüsse 4,5 zugeführt. An den Gleichspannungsanschlüssen 6, 7 wird von der Graetz-Brücke die gleichgerichtete Netzwechselspannung als sinusbetragförmige Zwischenkreisspannung abgegeben; diese liegt zwischen dem Pluspol 6 und dem Minuspol 7 der Graetz-Brücke 3 an. Die Induktivität 8 ist so dimensioniert, daß sie bei der Frequenz der Netzwechselspannung und Nennstrom der Last einen im Vergleich zur Netzwechselspannung geringen Spannungsabfall aufweist, und die Kapazität 9 bildet bei der Frequenz der Netzwechselspannung einen im Vergleich zum Laststrom geringen Strom aus. Die Induktivität 8 und die Kapazität 9 beeinflussen somit den zeitlichen Verlauf der Zwischenkreisspannung nur in vernachlässigbarem Maße. Somit wird die sinusbetragförmige Zwischenkreisspannung im wesentlichen unverändert den Speisespannungsanschlüssen 10, 12 der Modulationsstufe 11 zugeleitet.

Von der Steuersignal-Erzeugungsstufe 13 wird ein gegenüber der Netzwechselspannung hochfrequentes Steuersignal über den Ausgang 14 abgegeben und der Modulationsstufe 11 an ihrem Steuersignaleingang 15 zugeleitet. Die Modulationsstufe ist nach Art eines dreiphasigen Wechselrichters ausgebildet. In der Modulationsstufe 11 werden nach Maßgabe des Steuersignals aus der Zwischenkreisspannung drei hochfrequente Speisespannungen erzeugt, die über je eine Verbindungsleitung von der Modulationsstufe 11 an die Last 1 weitergegeben werden. Dadurch wird die Last 1 mit Energie gespeist. Der als Last 1 beispielhaft dargestellte Motor kann als Asynchronmotor oder Reluktanzmotor ausgebildet sein. Durch das Steuersignal von der Steuersignal-Erzeugungsstufe 13 werden für einen derartigen Motor die hochfrequenten Speisespannungen in an sich bekannter Weise derart geformt, daß der Motor mit der gewünschten Drehzahl und dem gewünschten Drehmoment betrieben wird. Dabei bestimmen sich die Speisespannungen für die Last 1 aus dem Produkt des Steuersignals am Steuersignaleingang 15 mit der Zwischenkreisspannung an den Speisespannungsanschlüssen 10, 12.

Die Induktivität 8 und die Kapazität 9 sind derart dimensioniert, daß sie eine Hochfrequenz-Filterstufe zum Unterdrücken von Störungen bilden, die insbesondere mit der Frequenz des Steuersignals auftreten. Solche Störungen, durch das Steuersignal hervorgerufen, werden durch die Hochfrequenz-Filterstufe 8, 9 wirksam vom Energieversorgungsnetz 2 ferngehalten.

Da die Induktivität 8 und die Kapazität 9 für die Frequenz der Netzwechselspannung als Energiespeicher keine Rolle spielen, weist die Zwischenäreisspannung mit großer Näherung einen sinusbetragförmigen Verlauf auf. Für ein ohmsches Verhalten der Last 1 ist die von ihr aufgenommene Leistung stets dem Quadrat des Augenblickswerts der Zwischenkreisspannung, d.h. der Spannung an den Speisespannungsanschlüssen 10, 12 der Modulationsstufe 11, proportional. Damit sind auch die Netzwechselspannung und der aus dem Energieversorgungsnetz entnommene Strom einander proportional. Bei sinusförmiger Netzwechselspannung stellt sich somit der geforderte sinusförmige Verlauf für den aus dem Energieversorgungsnetz entnommenen Strom ein.

In einer Abwandlung der Fig. 1 kann die Induktivität 8 auch in einer der Zuleitungen zwischen dem Energieversorgungsnetz 2 und der Graetz-Brücke 3 angeordnet sein.

Fig. 2 zeigt eine Abwandlung der Schaltungsanordnung nach Fig. 1, bei der Fig. 1 um eine Steuersignal-Inversionsstufe ergänzt worden ist. Diese Steuersignal-Inversionsstufe umfaßt eine Vorzeichendetektionsstufe 16, die mit ihren Eingängen an die Wechselsparnungsanschlüsse 4, 5 der Graetz-Brücke 3 angeschlossen ist, sowie eine Multiplikationsstufe 17, die in die Verbindung zwischen dem Ausgang 14 der Steuersignal-Erzeugungsstufe 13 und dem Steuersignal-Eingang 15 der Modulationsstufe 11 eingefügt ist. Dabei ist ein Eingang der Multiplikationsstufe 17 mit dem Ausgang 14 verbunden, und der Steuersignaleingang 15 ist mit einem Ausgang der Multiplikationsstufe 17 verbunden. Ein zweiter Eingang der Multiplikationsstufe 17 ist mit einem Ausgang der Vorzeichendetektionsstufe 15 verbunden.

Im Betrieb der Schaltungsanordnung nach Fig. 2 wird in der Vorzeichendetektionsstufe 16 die Polarität der ihr zugeführten Netzwechselspannung gemessen. Die Vorzeichendetektionsstufe 16 gibt ein Vorzeichensignal ab, welches die Polarität der Netzwechselspannung anzeigt. Dieses Vorzeichensignal wird in der Multiplikationsstufe 17 mit dem Steuersignal multipliziert, wodurch ein vorzeichenkorrigiertes Steuersignal erzeugt und dem Steuersignaleingang 15 der Modulationsstufe 11 zugeleitet wird. Im vorzeichenkorrigierten Steuersignal ist die Polarität des Steuersignals vom Ausgang 14 der Steuersignal-Erzeugungsstufe 13 bei jedem Nulldurchgang der Netzwechselspannung umgekehrt.

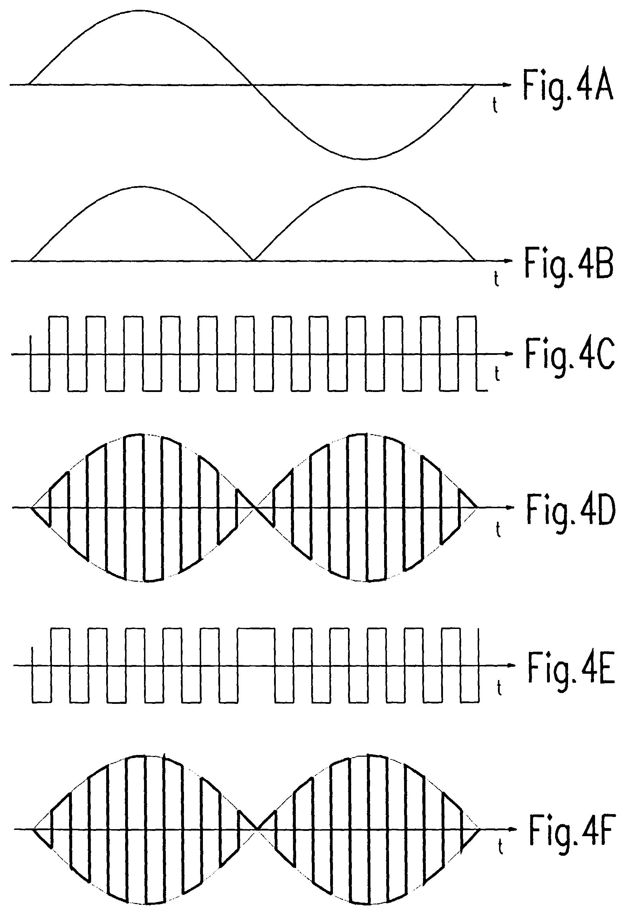

Die Wirkungsweise der Steuersignal-Inversionsstufe 16, 17 ist in Fig. 4 an einem vereinfachten Beispiel erläutert. Dabei zeigt Fig. 4a) die sinusförmige Netzwechselspannung; Fig. 4b) zeigt den daraus durch Zweiweggleichrichtung gewonnenen, sinusbetragförmigen Verlauf der Zwischenkreisspannung. In Fig. 4c) ist ein vereinfachter, rechteckförmiger Verlauf für ein hochfrequentes Steuersignal über derselben Zeitachse t wie die Diagramme nach Fig. 4a) und 4b) aufgetragen. Der Verlauf gemäß Fig. 4c) entspricht beispielsweise einem Steuersignal am Ausgang 14 der Steuersignal-Erzeugungsstufe 13. Durch Multiplikation der Signale gemäß Fig. 4b) und Fig. 4c) ergibt sich der mit Vollinie ausgezogene Signalverlauf nach Fig. 4d) als schematische Darstellung einer Speisespannung für die Last 1.

Im Gegensatz dazu zeigt Fig. 4e) ein vorzeichenkorrigiertes Steuersignal welches beim Nulldurchgang der Netzwechselspannung gemäß Fig. 4a) sein Vorzeichen ändert. Wird nun dieses vorzeichenkorrigierte Steuersignal gemäß Fig. 4e) mit der sinusbetragförmigen Zwischenkreisspannung gemäß Fig. 4b) multipliziert, ergibt sich als resultierende Speisespannung der in Fig. 4f) mit Vollinie ausgezogene Spannungsverlauf. Die hochfrequente Speisespannung gemäß Fig. 4f) weist beim Nulldurchgang der Netzwechselspannung 4a) gegenüber dem Verlauf nach Fig. 4d) einen Vorzeichenwechsel auf, so daß während der gesamten zweiten Halbwelle der Netzwechselspannung die dargestellten Speisespannungen nach Fig. 4d) und Fig. 4f) gegenphasig zueinander verlaufen.

Fig. 3 zeigt ein besonders einfaches Ausführungsbeispiel für die Ausbildung der Multiplikationsstufe 17 in dem Fall, daß das Steuersignal ein binäres Signal ist. Dieses Steuersignal vom Ausgang 14 ist in Fig. 3 schematisch als rechteckförmiges Signal mit einem von 1 abweichenden Tastverhältnis (der Deutlichkeit halber) dargestellt. Es wird dem ersten Eingang der Multiplikationsstufe 17 zugeleitet. Von der Vorzeichendetektionsstufe 16 wird dem zweiten Eingang der Multiplikationsstufe 17 das Vorzeichensignal zugeführt, welches ebenfalls als binäres Signal ausgebildet ist und während des Nulldurchgangs der Netzwechselspannung zwischen seinen beiden Signalpegeln wechselt. Demzufolge kehrt sich auch die Polarität des vorzeichenkorrigierten Steuersignals am Ausgang der Multiplikationsstufe 17, d.h. des Exklusiv-Oder-Gatters, um. Dieses Signal, dessen Verlauf ebenfalls schematisch in Fig. 3 dargestellt ist, wird dem Steuersignaleingang 15 der Modulationsstufe 11 zugeleitet.

## Patentansprüche

1. Schaltungsanordnung zum Speisen einer ein- oder mehrphasigen Last aus einem Energieversorgungsnetz, welches eine wenigstens nahezu sinusförmige Netzwechselspannung führt, für deren Frequenz die Last ein wenigstens nahezu ohmsches Verhalten aufweist, mit
- einer Zweiweg-Gleichrichterstufe zum Gewinnen einer wenigstens nahezu sinusbetragförmigen Zwischenkreisspannung,
- einer nach Art eines ein- oder mehrphasigen Wechselrichters ausgebildeten Modulationsstufe, mit der nach Maßgabe eines Steuersignals, dessen Frequenz groß gegenüber der Frequenz der Netzwechselspannung ist, aus der Zwischenkreisspannung wenigstens eine hochfrequente Speisespannung zum Zuführen zur Last erzeugt wird, wobei die Speisespannung(en) aus dem Produkt des Steuersignals mit der Zwischenkreisspannung bestimmt wird (werden), und
- einer mit der Zweiweg-Gleichrichterstufe gekoppelten Hochfrequenz-Filterstufe zum Unterdrücken von in das Energieversorgungsnetz eingestreuten Störungen in einem die Frequenz des Steuersignals einschließenden Frequenzbereichs.

2. Schaltungsanordnung nach Anspruch 1,
gekennzeichnet durch eine Steuersignal-Inversionsstufe, durch die das Vorzeichen des Steuersignals von je einer Halbperiode der Netzwechselspannung zur nächsten Halbperiode gewechselt wird.

3. Schaltungsanordnung nach Anspruch 2,
dadurch gekennzeichnet, daß die Steuersignal-Inversionsstufe umfaßt:
- eine Vorzeichendetektionsstufe zum Detektieren des Augenblickswertes der Polarität der Netzwechselspannung und zum Abgeben eines diese Polarität anzeigenden Vorzeichensignals,
- eine Multiplikationsstufe zum Erzeugen eines vorzeichenkorrigierten Steuersignals durch Multiplizieren des Steuersignals mit dem Vorzeichensignal.

4. Schaltungsanordnung nach Anspruch 2 oder 3, in der das Steuersignal als binäres Schaltsignal ausgebildet ist,
dadurch gekennzeichnet, daß das Steuersignal in der Steuersignal-Inversionsstufe einen mit dem Vorzeichensignal umschaltbaren Inverter durchläuft.

5. Antrieb mit einem elektronisch kommutierten Motor,
gekennzeichnet durch eine Schaltungsanordnung nach einem der vorhergehenden Ansprüche, wobei der Motor die Last bildet.

6. Elektrisches Gerät,
gekennzeichnet durch einen Antrieb nach Anspruch 5.
